Europäisches Patentamt

European Patent Office

Office européen des brevets

(11) Publication number: 0 515 953 A1

# EUROPEAN PATENT APPLICATION

(21) Application number: 92108419.0

(22) Date of filing: 19.05.92

(51) Int. Cl.5: B61D 25/00, B60J 1/10

(30) Priority: 25.05.91 GB 9111359

(43) Date of publication of application:
02.12.92 Bulletin 92/49

(84) Designated Contracting States:
BE DE ES FR IT

(71) Applicant: HEYWOOD WILLIAMS LIMITED
Waverley, Edgerton Road
Huddersfield, West Yorkshire HD3 3AR(GB)

(72) Inventor: Greenhalgh, Neil
41 Elder Lane, Burntwood, Walsall,
Staffordshire WS7 9BT(GB)

(74) Representative: Lewis, Samuel Hewitt et al
FORRESTER & BOEHMERT
Franz-Joseph-Strasse 38
W-8000 München 40(DE)

(54) Panel assembly, preferably for glazing.

(57) A panel assembly for use, e.g. for glazing of railway vehicles, comprises a peripheral frame (14) for securing to a vehicle body around an aperture therein and a panel frame (15) fitting within the peripheral frame and secured thereto by releasable fastening means, e.g. screws at spaced intervals around the frame. The panel frame is preferably glazing e.g. by double glass sheets (27, 28) held by adhesive, so that the surface of the outer sheet is flush with the outer surface of the vehicle body or a cladding on the vehicle body.

FIG 2

EP 0 515 953 A1

This invention relates to a panel assembly for supporting a panel in an aperture in a vehicle body. Preferably the panel is of transparent sheet material so that the panel assembly constitutes a window, but a panel of non-transparent material may equally well be supported in an assembly according to the invention.

The invention has been developed in relation to the flush glazing of railway vehicles, wherein the surface of the window glass on the exterior of the vehicle is required to be flush or substantially flush with the surrounding surface of the vehicle body. The invention is also applicable to the so-called ribbon glazing of vehicle bodies, wherein between the windows the exterior of the vehicle body has a cladding of glazing material so that the vehicle presents the appearance of having an unbroken run of the glazing material. Particularly in railway vehicles, the requirement for the attractive appearance presented by flush glazing or ribbon glazing must be consistent with the ability to replace a glazing panel without too much difficulty should it be broken in service, which is not uncommon in the case of railway vehicles. The expedient most commonly adopted for flush glazing of motor vehicles, namely the adhesive bonding of the glazing panel directly to the structure of the vehicle, clearly does not meet with the requirement for easy replacement, as it is time consuming and requires skilled labour.

It is broadly the object of the present invention to provide a panel assembly suitable for use in flush or ribbon glazing, wherein the requirement for easy replacement of a broken glazing panel is complied with. Other features and advantages of the invention will be pointed out hereafter.

According to the invention, we provide a panel assembly comprising a peripheral frame adapted to be secured to a vehicle body, around the periphery of an aperture therein, and a panel frame having a panel secured therein, the panel frame fitting within the peripheral frame and being securable therein by releasable fastening means.

For flush glazing or ribbon glazing, respectively, a surface of the panel may then lie substantially flush with an external surface of the surrounding vehicle body or a cladding element provided on the latter.

The panel assembly may constitute a window, in which case the panel is a glazing panel comprising transparent sheet material, either single glazed or multiple glazed comprising a number of sheets of such material fixed in spaced parallel relationship to one another. Preferably such a single or multiple glazed panel is adhesively secured to the panel frame by use of a suitable adhesive bonding agent.

The releasable fastening means by which the panel frame is secured in its position fitted to the peripheral frame preferably comprises a plurality of threaded fasteners provided at spaced intervals around the panel assembly. Such fasteners may comprise screws which pass through a part of the panel frame and engage in screw threaded apertures in the peripheral frame.

To ensure a weather-tight seal between the peripheral frame and panel frame, sealing means is preferably provided between facing surfaces thereof. Such sealing means may comprise an elastomeric element or elements. A sealing element may be provided between facing surfaces of the peripheral frame and panel frame which are clamped together when the releasable fastening means is tightened.

The peripheral frame and panel frame may each comprise an extruded metal element, e.g. of an aluminium alloy, which is bent so that single such element provides each of the frames. The assembly may be generally rectangular as viewed in a direction perpendicular to the plane of the panel surface, having curved corners.

The panel frame may be fittable into and removable from the peripheral frame from the interior of the vehicle in which the assembly is provided. The removable fastening means may also be accessible from the interior of the vehicle. However, it would be within the scope of the invention if the panel frame were fittable and removable from the exterior of the vehicle.

The invention will now be described by way of example with reference to the accompanying drawings, wherein:-

Figure 1 an elevation of a window assembly according to the invention;

Figure 2 is a section through part of the frame of the assembly; and

Figures 3 and 4 are sections through further embodiments of frames of assemblies according to the invention.

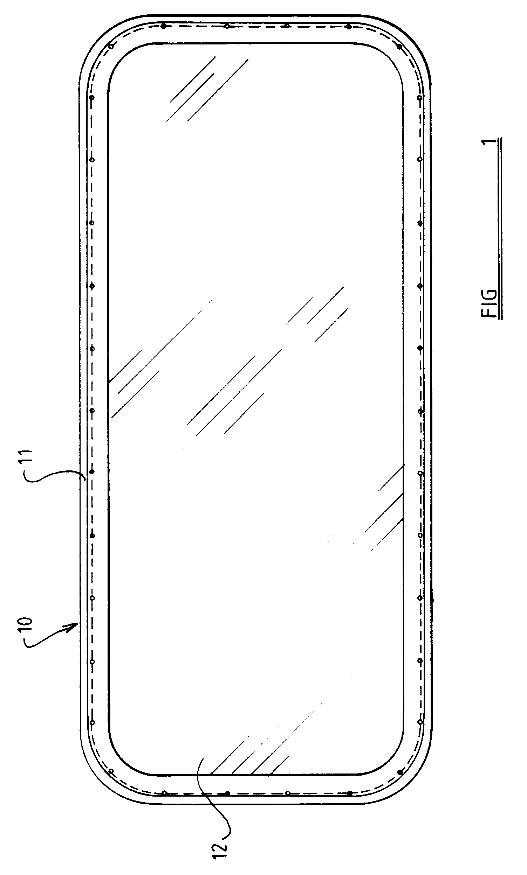

Referring firstly to Figure 1 of the drawings, there is shown a panel assembly which is a window 10. It comprises a frame assembly which is indicated generally at 11, and a glazing panel 12. The overall shape of the window is rectangular, but with rounded corners.

Referring now to Figure 2 of the drawings, the frame assembly 11 of the window comprises a peripheral frame 14 and a panel frame 15. The peripheral frame 14 is an extruded section of metal, e.g. an aluminium alloy, and its cross-sectional shape includes a portion 16 and, extending generally at right angles to the portion 16, a portion 17 which remote from the portion 16 has a thickened portion 18.

The portion 16 of the peripheral frame is intended for being secured to the wall structure of a vehicle body, e.g., a railway vehicle, around the periphery of an aperture therein. In Figure 2, such a vehicle body wall structure is shown in broken lines, comprising spaced metal members 19, 20 of which the latter, adjacent the aperture, extends towards the exterior of the vehicle as indicated at 21 and then, at 22, lies contiguous with the member 19. The portion 16 of the peripheral frame 14 lies in face to face engagement with the part 22, and is secured thereto by means not shown. Such means may comprise fasteners such as rivets, bolts or studs, or, if the materials of the peripheral frame and the wall structure are compatible, welding. Alternatively, the peripheral frame may be adhesively bonded to the wall structure of the vehicle.

The panel frame 15 of the window assembly comprises an extrusion of metal, e.g. aluminium alloy, and in cross-sectional shape is somewhat T-shaped with a portion 23 which extends parallel to the portion 17 of the peripheral frame 14, a box section portion 26, and portions 24, 25 which extend in opposite directions from one another transversely of the portion 23. The portion 24 faces the portion 18 of the peripheral frame 14, while the portion 25 defines, with the portion 23 and box section portion 26 a stepped rebate for receiving the glazing panel 12.

The glazing panel 12 is a double glazed panel, comprising two sheets 27, 28 of glass separated by a peripheral spacer 29. The glazing panel is adhesively bonded to the panel frame 15 by an adhesive bonding agent which is indicated in two separate areas 30, 31 so that both the glass sheets 27, 28 are securely bonded to the panel frame 15.

It will be appreciated from consideration of the cross-sectional shape of the peripheral frame 14 and panel frame 15 that the latter can be fitted into the former from the interior of the vehicle, in the direction of arrow 32. For securing the frames together when thus fitted, the portion 18 of the peripheral frame 14 is provided with a plurality of internally screw threaded bores 33, spaced around the periphery of the window. The screw threads may be provided by thread inserts in the bores, to enable repeated insertion and removal of screws without suffering damage. The portion 24 of the panel frame 15 is provided with apertures in alignment with the screw threaded bores 33, to receive screws, not shown.

For weather sealing between the peripheral and panel frames of the assembly, the peripheral frame is provided with two recesses 34, 35 for receiving elastomeric sealing elements which each extend around the entire periphery of the window. The recess 34 faces the portion 23 of the panel frame 15 adjacent the external surface of the vehicle, and the elastomeric seal received therein takes up dimensional tolerances between the peripheral frame and panel frame. The recess 35 faces the portion 24 of the panel frame 15, and the seal in the recess 35 is thus tightly clamped when the screws engaging with the bores 33 are tightened.

The assembly further comprises a plastics trim element 36 which is somewhat T-shaped in cross-section, with a leg 37 which engages in a recess provided between the ends of the vehicle body structural members 19, 22 and the peripheral frame 14, and a head 38 with an arcuate outer surface and which covers the interface between the peripheral frame 14 and panel frame 15. A finishing insert 39, which may be a mastic material introduced in situ from an applicator gun, protects the adhesive bonding material 30 from light and thus prevents degradation thereof. Also, the outside surface of the outer sheet 27 of glass is provided around its periphery with a coating, e.g. by silk screen printing, of a substance opaque or substantially opaque to ultra-violet light to prevent such degradation of the bonding material in the areas 30,31.

It will be noted that the surface of the outer sheet 27 of glass is substantially flush with the surface of the outer wall member 19 of the vehicle body, immediately adjacent the window. The required condition of flush glazing is thus achieved, only the trim element 36 protruding slightly. If the glass sheet 27 or 28 becomes broken, removal of the screws engaging with the bores 33 enables the entire panel frame and the remains of the glass bonded thereto to be removed from the interior of the vehicle, and a replacement glazed panel fitted. Such removal and replacement does not require greatly skilled labour and can be performed quickly compared with the procedures necessary to remove the remains of broken glass from a frame and adhesively secure fresh glass thereto. At a vehicle maintenance establishment, a supply of replacement panel frames with glass fitted thereto can be held, and removed glazing panel frames can be re-glazed wherever the specialist attention required for bonded glazing is available.

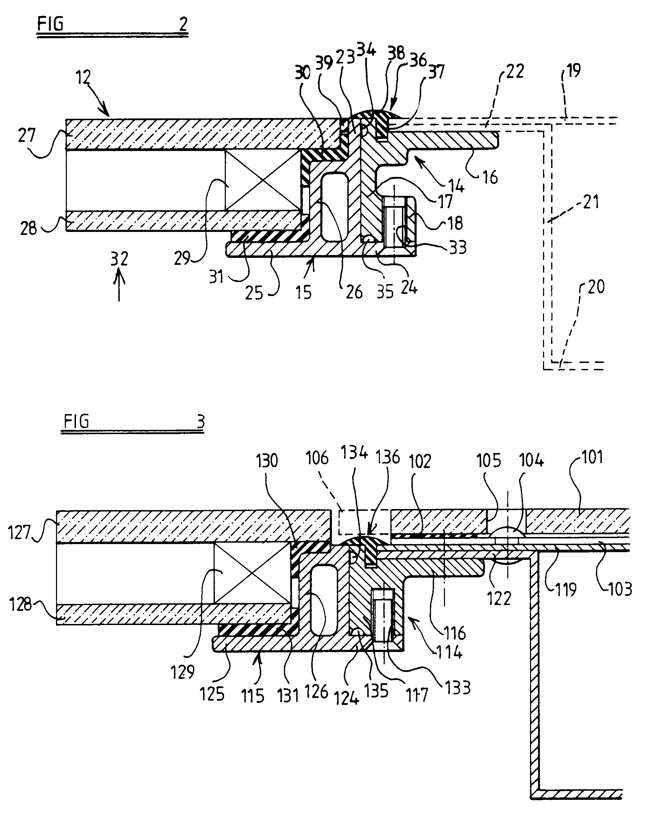

Referring now to Figure 3 of the drawings, this shows an alternative embodiment of the invention adapted for use with the glazing system known as ribbon glazing. In the following description relating to Figure 3, components corresponding or analogous to components appearing in the assembly shown in Figure 2 are identified by the same reference numerals, with the addition of 100, and such parts will not be described in such great detail.

Thus, the assembly shown in Figure 3 comprises vehicle body structural members including contiguous parts 119, 122, but instead of the external surface of the part 119 being visible it is clad with a sheet 101 of glass of the same type as the exterior glass sheet 127 of the window. The sheet 101 is adhesively bonded by a bonding agent 102 to a metal packing member 103, which is secured to the members 119, 122 by fasteners such as rivets as indicated at 104, accessible through apertures as 105 in the sheet 101.

The glazing panel assembly comprises a peripheral frame 114 and a panel frame 115, of which the former in cross-section has a portion 116 which lies against and is secured to the parts 119, 122 of the vehicle wall structure, and a portion 117 extending rearwardly towards the interior of the vehicle therefrom. The portion 117 has spaced bores 133 provided with thread inserts for receiving screws. The panel frame 115 comprises a box section portion 126 and portions 124, 125 extending laterally therefrom in opposite directions, the portion 124 having apertures through which screws can pass to engage in the threaded bores 133 in the peripheral frame 114. When the panel frame is fitted into the peripheral frame and held by such screws, a weather tight seal therebetween is provided by elastomeric seals in recesses 134, 135 in the peripheral frame 114.

The panel frame 115 provides a stepped rebate for receiving a double glazing panel comprising spaced sheets of glass 127, 128 with a spacer 129 therebetween, adhesively bonded to the panel frame by a bonding agent applied in two regions 130, 131. A T-section plastics trim member 136 fitted to the peripheral frame covers the interface between the panel frame and peripheral frame.

If a smaller gap between the front sheet 127 of the glazing panel and the cladding sheet 101 is desired, the latter may be extended as indicated in broken lines at 106. Instead of the trim section 136 a compressible seal could be attached to the inside surface of the cladding glass sheet 101 at this point. A mastic sealer could alternatively or in addition be used here, as required.

In both the above-described embodiments, the panel frame assembly with its glazing panel is inserted and removed from the peripheral frame from the interior of the vehicle in which the window is provided. With appropriate modification of the cross-sectional shapes of the panel and peripheral frames, the panel frame could be arranged to be fitted and removed from the exterior of the vehicle. The screws or other fastening means for securing the two frames together may be accessible from the interior or the exterior of the vehicle.

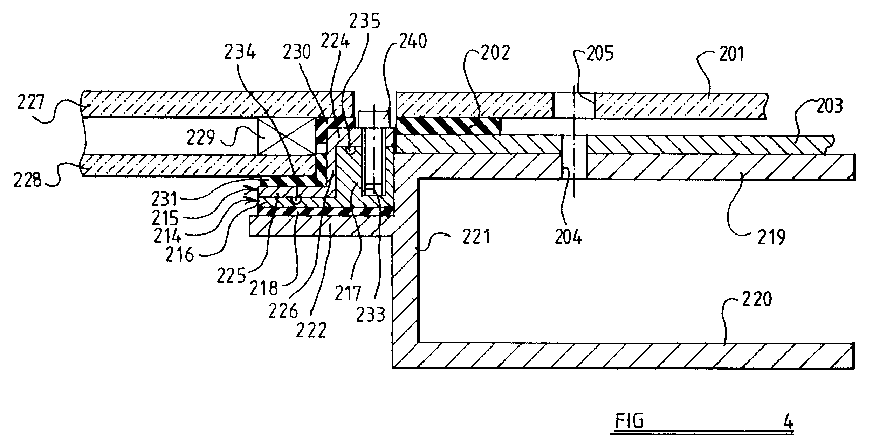

Referring now to Figure 4 of the drawings, this shows a further embodiment of the invention wherein, as above referred to, the panel frame is arranged to be inserted and removed from the peripheral frame from the exterior of the vehicle. This embodiment incorporates a ribbon glazing system.

In Figure 4, part of the wall structure of a vehicle body comprises spaced parts 219, 220 joined by a part 221 from which a flange 222 extends laterally. The body part 219 carries a cladding sheet 201 of glass, adhesively bonded by a layer 202 of bonding agent to a backing plate 203 which is secured to the part 219 by fasteners engaging apertures 204 therein, the fasteners being accessible through holes 205 in the glass cladding sheet 201.

A peripheral frame 214 is secured to the vehicle body structure, the peripheral frame comprising a portion 217, provided with bores 233 with screw thread inserts, and a portion 216 extending therefrom. The peripheral frame 214 is adhesively secured to the vehicle body by a bonding agent 218 applied between the peripheral frame and the flange 222 of the body. The bores 233 in the peripheral frame face the exterior of the vehicle.

Within the peripheral frame is fitted a panel frame 215 which comprises parallel portions 224, 225 offset from one another and joined by a portion 226. The panel frame 215 is secured to the peripheral frame by a plurality of fasteners such as screws indicated at 240.

The peripheral frame 214 has two recesses 234, 235 for receiving elastomeric sealing elements. These are compressed between the peripheral and panel frames when the screws 240 are tightened, to ensure a weather-tight seal therebetween.

The panel frame 215 carries a double glazing panel comprising spaced sheets of glass 227, 228, separated by a peripheral spacer 229. Both sheets of glass are adhesively bonded to the panel frame by a bonding agent applied in two regions 230, 231. The outer surface of the outer sheet 227 of glass has its periphery provided with a shading coating to prevent degradation of the bonding agent due to ultra-violet light.

The surfaces of the glass sheet 227 of the glazing panel and the cladding glass sheet 201 are substantially flush with one another, and only a small gap exists therebetween to provide for access to the screws 240.

In the above-described embodiments of the invention, the panel assembly is a window. The invention is also, however, applicable to a panel assembly wherein the panel is of a non-transparent material, e.g. to provide a removable cover to an equipment compartment or the like but in the case where the external surface of the panel is required to be substantially flush with the surrounding surface of the vehicle body without the appearance of fasteners.

Although described above in relation to its application to a rail vehicle, it will be appreciated that the invention is applicable more generally where similar or analogous requirements to those above-described arise.

The features disclosed in the foregoing description, or the following claims, or the accompanying drawings, expressed in their specific forms or in terms of a means for performing the disclosed function, or a method or process for attaining the disclosed result, as appropriate, may, separately or in any combination of such features, be utilised for realising the invention in diverse forms thereof.

**Claims**

1. A panel assembly comprising a peripheral frame (14) adapted to be secured to a vehicle body around the periphery of an aperture in the vehicle body, and a panel frame (15) for having a panel (12) secured therein, the panel frame fitting within the peripheral frame and being securable therein by releasable fastening means.

2. A panel assembly according to Claim 1 wherein, when installed, a surface of the panel (12) lies substantially flush with an external surface of the surrounding vehicle body (19) or of a cladding element (101;201) provided on the body.

3. A panel assembly according to Claim 1 or Claim 2 wherein the panel (12) is a glazing panel comprising at least one sheet (27, 28; 127, 128; 227, 228) of glazing material.

4. A panel assembly according to Claim 3 wherein said at least one sheet of glazing material is adhesively secured to the panel frame.

5. A panel assembly according to any one of the preceding claims wherein said releasable fastening means comprises a plurality of threaded fasteners, provided at spaced intervals around the panel assembly.

6. A panel assembly according to Claim 5 wherein said threaded fasteners comprise screws which pass through a part of the panel frame and engage screw-threaded apertures (33; 133; 233) in the peripheral frame.

7. A panel assembly according to any one of the preceding claims wherein sealing means is provided between facing surfaces of the panel frame and peripheral frame.

8. A panel assembly according to Claim 7 wherein said sealing means comprises an elastomeric element or elements.

9. A panel assembly according to Claim 7 or Claim 8 wherein a sealing element is clamped between facing surfaces when the releasable fastening means is tightened.

10. A panel assembly according to any one of the preceding claims wherein the peripheral frame and panel frame each comprise a single metal element bent to form the frame.

11. A panel assembly according to Claim 10 wherein such metal element is an extrusion of an aluminium alloy.

12. A panel assembly according to any one of the preceding claims wherein the panel frame is fittable into and removable from the peripheral frame from the interior of a vehicle in which the assembly is installed.

13. A panel assembly according to any one of the preceding claims wherein the releasable fastening means is accessible from the interior of a vehicle in which the assembly is installed.

14. A vehicle having at least one panel assembly according to any one of the preceding claims.

FIG 1

FIG 2

FIG 3

FIG            4

EP 0 515 953 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 243 307 (SCHWEIZERISCHE ALUMINIUM AG) <br> * column 2, line 18 - column 3, line 17; figures 1,2 * | 1,14 | B61D25/00 <br> B60J1/10 |
| A | | 2,3,5,6, 10,11,13 | |
| X | US-A-4 834 447 (B. J. HIGGINS) <br> * column 5, line 18 - line 39 * <br> * column 6, line 30 - line 54; figures 2,5,6 * | 1,14 | |
| A | | 3,5,6, 10,11,13 | |
| A | EP-A-0 378 359 (JRA LIMITED) <br> * column 2, line 54 - column 3, line 25 * <br> * column 3, line 38 - line 42; figure 2C * | 1 | |
| A | DE-U-6 940 553 (FA. HANS HOLZBAUER) <br> * page 3, line 10 - page 4, paragraph 1; figure 1 * | 1 | |

TECHNICAL FIELDS SEARCHED (Int. Cl.5)

B61D
B60J
E06B

The present search report has been drawn up for all claims

| Place of search | Date of completion of the search | Examiner |
|---|---|---|
| THE HAGUE | 27 AUGUST 1992 | P. CHLOSTA |